# EUROPÄISCHE PATENTSCHRIFT

(11) **EP 0 805 010 B1**
(45) Veröffentlichungstag und Bekanntmachung des Hinweises auf die Patenterteilung: **31.10.2001**
(21) Anmeldenummer: 96107024.0
(22) Anmeldetag: 03.05.1996
(51) Int. Cl.: B29B 13/06, B01D 53/26, B01J 20/34

(54) **Verfahren und Vorrichtung zum Aufbereiten eines Adsorptionsmittels**
Process and apparatus for regenerating an adsorbent agent
Procédé et appareil pour régénérer un adsorbant

(43) Veröffentlichungstag der Anmeldung: 05.11.1997
(73) Patentinhaber: Gräff, Roderich Wilhelm, Dr.-Ing., 78126 Königsfeld (DE)
(72) Erfinder: Gräff, Roderich Wilhelm, Dr.-Ing., 78126 Königsfeld (DE)

(56) Entgegenhaltungen:
- EP-A- 0 266 684
- EP-A- 0 626 244
- FR-A- 2 307 567
- FR-A- 2 464 744
- PATENT ABSTRACTS OF JAPAN vol. 8, no. 3 (C-203) & JP-A-58 170518 (NIHON SANSO)
- PATENT ABSTRACTS OF JAPAN vol. 6, no. 177 (C-124) & JP-A-57 094321 (HITACHI)

## Beschreibung

Die Erfindung betrifft ein Verfahren zum Aufbereiten eines ein Mittel, insbesondere Feuchte, enthaltenden Adsorptionsmittels, bei dem das Adsorptionsmittel durch heißes Regenerationsgas von dem Mittel befreit und anschließend gekühlt wird, wobei die beim Kühlen anfallende Wärme zum Aufheizen des Regenerationsgases in einen Wärmespeicher überführt wird, sowie eine Vorrichtung zur Durchführung des Verfahrens.

Aus dem Dokument DE-A-43 17 768 ist es bekannt, einzelne Töpfe oder dergleichen Behälter, in denen das Adsorptionsmittel enthalten ist, schrittweise durch eine Adsorptionszone, eine Regenerationszone und anschließend eine Kühlzone zu transportieren. Dabei wird zyklisch jeweils ein Topf mit frisch gekühltem und regeneriertem Adsorptionsmittel in die Adsorptionszone und ein Topf mit feuchtigkeitsgesättigtem Adsorptionsmittel aus der Adsorptionszone in die Regenerationszone weitergefördert. Dieses schrittweise Weitergeben einzelner Töpfe, die beispielsweise in einem Karussel angeordnet sind, hat den Nachteil, daß der Taupunkt des getrockneten Gases, üblicherweise Luft, immer etwas schwankt, wenn das Karussel weitergedreht wird.

Aus CA-A-2 124 228 ist die Verwendung eines Rotors anstelle der in einem Karussel angeordneten Töpfe bekannt, der eine stationäre Adsorptionszone, Regenrationszone und Kühlzone aufweist. In dem Rotor ist das Adsorptionsmittel fest angeordnet, das mit diesem durch die einzelnen Zonen kontinuierlich durchgedreht wird. Regeneration und Kühlung des Adsorptionsmittels laufen gleichzeitig ab, wobei von dem Gebläse angesaugte und durch eine Heizeinrichtung auf die Regenerationstemperatur aufgeheizte Außenluft als Regenerationsgas bzw. die angesaugte Außenluft in die Kühlzone geleitet werden. Letzteres hat den Nachteil, daß das frisch regenerierte Adsorptionsmittel mit der Feuchtigkeit der Außenluft belastet wird. Um diesen Nachteil zu vermeiden, kann man einen Wärmespeicher verwenden. Soweit ein Wärmespeicher benutzt wird, erfolgen Regeneration und Kühlung in einer einzigen Zone nacheinander, während der Rotor von Zeit zu Zeit angehalten wird, wobei dann ein und dasselbe Segment an Adsorptionsmittel erst erhitzt und dann gekühlt wird. Dieses zeitweilige Stillstehen des Rotors hat den Nachteil, daß der Taupunkt der getrockneten Luft immer etwas schwankt, wenn der Rotor ein Stück weiter gedreht wird. Auch ist der technische Aufwand mit zwei Wechselventilen relativ groß. Der Wärmespeicher muß relativ groß gebaut werden, da er den gesamten Wärmeinhalt des Rotorabschnittes aufnehmen muß, der gerade gekühlt wird.

Der Erfindung liegt daher die Aufgabe zugrunde, die Aufbereitung des Adsorptionsmittels so zu gestalten, daß der Taupunkt des getrockneten Gases möglichst konstant und der bauliche Aufwand möglichst gering bleibt.

Bei dem eingangs genannten Verfahren ist dazu erfindungsgemäß vorgesehen, daß das Adsorptionsmittel nacheinander durch eine Adsorptionszone, in welcher das Adsorptionsmittel das Mittel aufnimmt, eine Regenerationzone, in welcher das Regenerationsgas durch das Adsorptionsmittel geleitet wird, und eine Kühlzone geführt wird, in welche dem Adsorptionsmittel die Wärme entzogen und in den Wärmespeicher überführt wird. Damit wird erreicht, daß der Taupunkt der getrockneten Luft praktisch konstant bleibt. In zweckmäßiger Ausgestaltung der Erfindung wird als Wärmespeicher das Gebläse eingesetzt. Bevorzugt wird das Adsorptionsmittel kontinuierlich durch die Adsorptionszone, die Regenerationszone und die Kühlzone geführt. Ferner empfiehlt es sich, ein Kühlgas im Kreislauf durch die Kühlzone, den Wärmespeicher und das Gebläse zu führen, wobei von Kühlung auf Regeneration umgeschaltet wird, wenn das Kühlgas den Wärmespeicher mit einer Temperatur verläßt, die oberhalb eines vorgegebenen Wertes liegt. Zweckmäßig wird die Regenerationszeit doppelt so lange wie die Kühlzeit für das die Regenerationszone und die Kühlzone durchlaufende Adsorptionsmittel gewählt. Durch sehr kurz gehaltene Regenerations- und Kühltakte wird erreicht, daß der Wärmespeicher baulich klein gehalten werden kann. Das Umschalten von Kühlen auf Regenerieren und umgekehrt kann damit nur von einem einzigen Temperaturfühler gesteuert werden, der wegen der niedrigen zu erfassenden Temperaturen sehr einfach sein kann. Ferner wird die Steuerung für den Verfahrensgang vereinfacht.

Zur Lösung der genannten Aufgabe dient auch eine Vorrichtung zum Aufbereiten eines ein Mittel, insbesondere Feuchte, enthaltenden Adsorptionsmittels gemäß DE-A-4 317 768 mit einem eine Adsorptionszone, eine Regenerationszone und eine Kühlzone aufweisenden Rotor, in welchem das Adsorptionsmittel enthalten ist, mit einem Filter, einem Wärmespeicher, einem Gebläse und eine Heizeinrichtung, die durch eine Gasleitung in Reihe geschaltet sind, wobei von der Heizeinrichtung eine Regenertionsgaszuleitung zur Regenerationszone führt und wobei von Rotor eine weitere Gasleitung in die das Filter mit dem Wärmespeicher verbindende Leitung führt, wenn in eine vom Gebläse zur Kühlzone führende Kühlgaszuleitung ein Stellventil geschaltet ist und die weitere Gasleitung eine von der Kühlzone ausgehende Kühlgasableitung ist.

Weitere bevorzugte Ausgestaltungen der Erfindung sind in den Unteransprüchen angegeben.

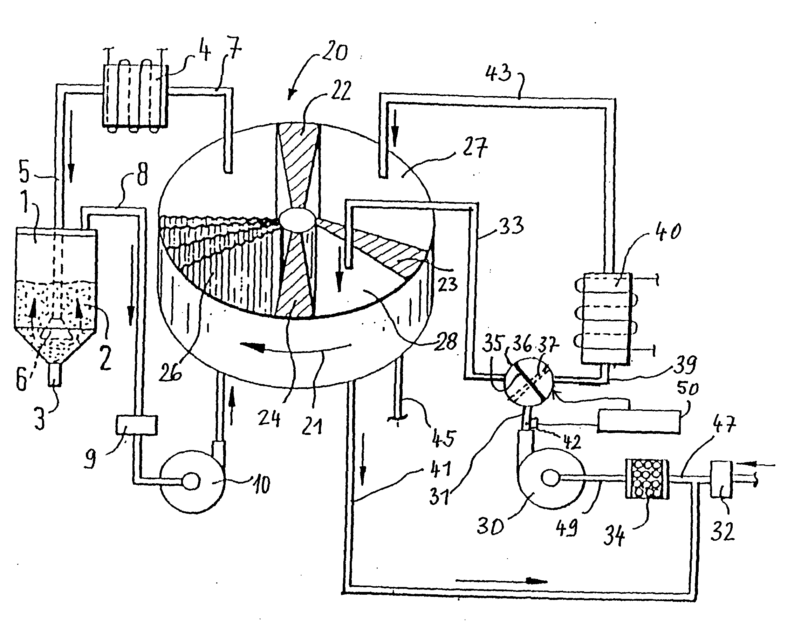

Die Erfindung wird nachstehend anhand des in der beigefügten Figur dargestellten Ausführungsbeispiels im einzelnen beschrieben.

In der Figur ist ein Wabentrockner 20 in Form eines Rotors zum Trocknen von feuchter Abluft aus einem Trocknungstrichter 1 dargestellt. In dem Trocknungstrichter 1 befindet sich eine Charge 2 aus Kunststoffgranulat, das kontinuierlich oder intermittierend in den Trocknungstrichter 1 von oben eingegeben wird. Nach dem Trocknen wird das Granulat aus dem Trocknungstrichter 1 durch eine untere Abgabeöffnung 3 ausgegeben.

Zum Trocknen des Granulats 2 erstreckt sich eine Trockenluftzuleitung 5 in den Trocknungstrichter 1 durch dessen Deckel und mündet in einem Verteiler 6 in der Nähe der Abgabeöffnung 3. Trockenluft, die in einer Heizeinrichtung 4 auf die erforderliche Temperatur von 80°C oder mehr gebracht worden ist, wird über die Trockenluftzuleitung 5 in den Trocknungsrichter 1 eingeleitet, strömt durch die Charge 2 im Trocknungstrichter 1 nach oben und verläßt diesen durch eine Abluftleitung 8 am Deckel des Trocknungstrichters.

Die mit Feuchte beladene Abluft aus dem Trocknungstrichter 1 gelangt über Abluftleitung 8 in ein Filter 9 und anschließend in ein Gebläse 10, welches die Abluft in den Wabentrockner 20 drückt. Der Wabentrockner 20 enthält eine Drehscheibe, die etwa ein bis dreimal pro Stunde eine Umdrehung in Richtung des Pfeiles 21 ausführt. Durch drei stationär angeordnete Dichtstreifen 22, 23, 24 werden die Wabenzellen, die aus mit einem Molekularsieb beschichtetem gefalteten Papier oder Fiberglas als Adsorptionsmittel bestehen, in drei Zonen unterteilt.
In der Adsorptionszone 26 wird der sie durchströmenden Abluft aus dem Gebläse 10 die mitgeführte Feuchte durch Adsorption an dem Adsorptionsmittel entzogen, so daß die Adsorptionszone 26 trockene Luft über die zu Heizeinrichtung 4 führende Zuluftleitung 7 verläßt. In der Regenerationszone 27 wird das Adsorptionsmittel durch heißes Regenerationsgas regeneriert, indem die im Adsorptionsmittel enthaltene Feuchte aus diesem ausgetrieben wird. In der an der Regenerationszone 27 in Umdrehungsrichtung 21 des Rotors anschließenden Kühlzone 28 wird dem Adsorptionsmittel Kühlluft zugeführt und das aus der Regenerationszone 27 kommende aufgeheizte Adsorptionsmittel auf eine Temperatur herunter gekühlt, bei welcher das Molekularsieb Feuchte effektiv aufnehmen kann. Nicht dargestellt ist ein Antriebsmechanismus für den Wabentrockner 20, beispielsweise ein elektrischer Reibradantrieb.

Zum Einleiten des heißen Regenerationsgases in die Regenerationszone 27 wird von einem Gebläse 30 Außenluft über ein Filter 32 sowie einen letzterem nachgeschalteten Wärmespeicher 34 angesaugt. Eine Ausgangsleitung 31 aus dem Gebläse 30 führt in ein Schaltventil 36 mit zwei Stellungen, wobei in einer ersten, ausgezogen dargestellten Stellung 35 das Schaltventil 36 die Ausgangsleitung 31 aus dem Gebläse 30 mit einer Kühlluftzuleitung 33 verbindet, die in die Kühlzone 28 des Rotors führt. In der gestrichelt dargestellten zweiten Stellung 37 des Schaltventils 36 verbindet letzteres die Gasleitung 31 mit einer Gasleitung 39, die zu einer Heizeinrichtung 40 führt. Von der Heizeinrichtung 40 geht eine Regenerationsgaszuleitung 43 in die Regenerationszone 27 des Rotors 20. Eine Regenerationsabluftleitung 45 führt aus der Regenerationszone 27 ins Freie. Aus der Kühlzone 28 führt eine Kühlabluftleitung 41 in eine das Filter 32 mit dem Wärmespeicher 34 verbindende Gasleitung 47.

In der von der Druckseite des Gebläses 30 kommenden Gasleitung 31 sitzt ein Temperturfühler 32, dessen Ausgangssignale von einer Steuerung 50 aufgenommen und verarbeitet werden. Die Steuereinrichtung 50 ist über eine Aktivierungsleitung mit dem Schaltventil 36 verbunden.

Um das Adsorptionsmittel z.B. Molekularsieb, das mit Feuchtigkeit gesättigt aus der Adsorptionszone 26 in die Regenerationszone 27 dreht, zu regenerieren, saugt das Gebläse 30 Außenluft über das Filter 32 und den Wärmespeicher 34 an. Ist der Wärmespeicher 34 mit Wärme aus der vorangegangenen Kühlung des Adsorptionsmittels geladen, heizt er die Außenluft in Richtung auf die Regenerationstemperatur vor. Das Schaltventil 36 befindet sich in der Stellung 37, so daß die Außenluft in der eingeschalteten Heizeinrichtung 40 auf die Regenerationstemperatur von etwa 250° erhitzt und über die Regenerationszuleitung 43 der Regenerationszone 27 zugeleitet wird. Während das Adsorptionsmittel sich in Richtung des Pfeiles 21 durch die Regenerationszone 27 bewegt, wird es regeneriert, so daß am Ende der Regenerationszone 27 heißes regeneriertes Adsorptionsmittel vorliegt. Am Ende der Regeneration ist der Wärmespeicher kalt.

Zur Kühlung des heißen Adsorptionsmittels in der Kühlzone 28 stellt die Steuerung 50 das Schaltventil 36 in die Stellung 35, so daß Luft aus der Leitung 41 über Kühlluftzuleitung 33 in die Kühlzone 28 gelangt, das Adsorptionsmittel durchstreicht, dessen Wärme mitnimmt und über Leitungen 41, 47 in den Wärmespeicher 34 transportiert. Ein geeigneter Wärmespeicher ist in DE-A-43 17 768 beschrieben. Der Wärmespeicher entzieht der Kühlluft die mitgeführte Wärme, so daß sie von dem Wärmespeicher 34 kalt über die Gasleitung 49 wieder in das Gebläse 30 gelangt. Die Kühlluft wird daher über die Leitungen 31, 33, 41, 47, 49 durch die Kühlzone 28, den Wärmespeicher 34, das Gebläse 30 und das Schaltventil 36 mehrmals im Kreislauf geführt, bis der Temperaturfühler 42 feststellt, daß die Temperatur an der Druckseite des Gebläses über die Temperatur der Außenluft anzusteigen beginnt. Dieser Anstieg erfaßt die Steuereinrichtung 50 und läßt daraufhin das Ventil 36 in die Stellung 37 umschalten. Es wird dann mit der Regeneration des sich in der Regenerationszone 27 befindenden Adsorptionsmittels fortgefahren. Nachdem das Aufheizen des zu regenerierenden Adsorptionsmittels in der Regenerationszone 27 und der damit verknüpften Verdampfung der adsorbierten Feuchtigkeit länger dauert als die Kühlung des sich in der Kühlzone 28 befindenden Adsorptionsmittels, ist die Regenerationszone 27 größer gehalten als die Kühlzone 28, beispielsweise doppelt so groß. Alternativ kann die Beaufschlagung des Adsorptionsmittels in der Regenerationszone 27 länger sein als die in der Kühlzone 28. Typisch ist ein Verhältnis von etwa 2:1.

Je häufiger von Kühlen auf Regenerieren und umgekehrt umgeschaltet wird, um so geringer sind die Schwankungen des Taupunktes der Zuluft in der Zuluftleitung 7. Typische Zeiten sind zum Beispiel zwei Minuten regenerieren und eine Minute kühlen. Sind diese Zeiten aber festgelegt, dann kann man anhand der bekannten Regenerationsluftmenge die Größe des Wärmespeichers 34 so festlegen, daß dieser innerhalb der zwei Minuten Regeneration praktisch voll auf Raumtemperatur abgekühlt wird. Bei dieser Festlegung ist dann sichergestellt, daß in der dann folgenden kürzeren Kühlphase des Rotors, während der der Wärmespeicher aufgeheizt wird, dieser sich nur auf der Eingangsseite aufheizt, so daß das vom Gebläse aus dem Wärmespeicher angesaugte Gas auch am Ende der Kühlphase noch eine Temperatur hat, die praktisch der Raumtemperatur entspricht.

In der vorstehend erläuterten Ausführungsform der Erfindung sind das Gebläse 30 und der Wärmespeicher 34 als separate Elemente dargestellt und beschrieben worden. Jedoch kann das Gebläse 30 selbst als Wärmespeicher dienen, so daß ein Wärmespeicher als separates Gerät entfallen kann. Der Wegfall eines separaten Wärmespeichers ist immer dann möglich, wenn die aus dem sich in der Kühlzone 28 befindenden Adsorptionsmittel abgeführte Wärmemenge klein ist im Verhältnis zur Wärmeaufnahmekapazität des Gebläses 30. Grundsätzlich kommen hierfür alle Gebläse oder Kompressoren in Betracht, wie sie üblicherweise in Adsorptionsvorrichtungen, insbesondere bei Trocknern, angewendet werden, sofern sie die auftretenden Temperaturen aushalten. Je nach Adsorptionsmittel liegen diese am Ende der Regeneration bei etwa 80 bis 250°C. Somit sind bevorzugt Gebläse und Kompressoren, die aus Metall hergestellt sind. Je höher ihre Wärmekapazität ist in Relation zu der geförderten Luftmenge, um so stärker ist ihre rekuperative Wirkung. Axial- wie Radialgebläse, insbesondere Seitenkanalgebläse, ebenso wie axial oder zentrifugal arbeitende Kompressoren sind geeignet.

Es liegt im Rahmen der Erfindung, statt Molekularsieb auch ein anderes Mittel als Adsorptionsmittel, beispielsweise Silicagel einzusetzen. Auch kann es genügen, wenn der Rotor sich nicht kontinuierlich sondern in vielen kleinen Schritten dreht. Schließlich kann der Kühlluftstrom druch das Adsorptionsmittel entgegengesetzt zur Durchströmungsrichtung des Regenerationsgases geleitet werden.

## Patentansprüche

1. Verfahren zum Aufbereiten eines ein Mittel, insbesondere Feuchte, enthaltenden Adsorptionsmittels, bei dem das Adsorptionsmittel durch heißes Regenerationsgas von dem Mittel befreit und anschließend gekühlt wird, wobei die beim Kühlen anfallende Wärme zum Aufheizen des Regenerationsgases in einen Wärmespeicher (34) überführt wird, **dadurch gekennzeichnet, daß** das Adsorptionsmittel nacheinander durch eine Adsorptionszone. (26), in welcher das Adsorptionsmittel das Mittel aufnimmt, eine Regenerationszone (27), in welcher das Regenerationsgas durch das Adsorptionsmittel geleitet wird, und eine Kühlzone (28) geführt wird, in welcher dem Adsorptionsmittel die Wärme entzogen und in den Wärmespeicher (34) überführt wird.

2. Verfahren nach Anspruch 1, **dadurch gekennzeichnet, daß** als Wärmespeicher ein Gebläse (30) eingesetzt wird.

3. Verfahren nach Anspruch 1 oder 2, **dadurch gekennzeichnet, daß** das Adsorptionsmittel kontinuierlich durch die Adsorptionszone, die Regenerationszone und die Kühlzone geführt wird.

4. Verfahren nach einem der vorstehenden Ansprüche, **dadurch gekennzeichnet, daß** ein Kühlgas im Kreislauf durch die Kühlzone (28) den Wärmespeicher (43) und ein Gebläse (30) geführt wird, wobei von Kühlung auf Regeneration umgeschaltet wird, wenn das Kühlgas den Wärmespeicher (34) mit einer Temperatur verläßt, die oberhalb eines vorgegebenen Wertes ist.

5. Verfahren nach einem der vorstehenden Ansprüche, **dadurch gekennzeichnet, daß** die Zeitspanne der Regeneration größer gewählt wird als diejenige der Kühlung, zweckmäßig doppelt so groß.

6. Vorrichtung zum Aufbereiten eines ein Mittel, insbesondere Feuchte enthaltenden Adsorptionsmittels, mit einem eine Adsortpionszone (26), eine Regenerationszone (27) und eine Kühlzone (28) aufweisenden Rotor (20), in welchem das Adsorptionsmittel enthalten ist, mit einem Filter (32), einem Wärmespeicher (34), einem Gebläse (30) und einer Heizeinrichtung (40), die durch eine Gasleitung (47, 31, 39) in Reihe geschaltet sind, wobei von der Heizeinrichtung (40) eine Regenerationsgaszuleitung (40) zu der Regenerationszone (27) führt und wobei vom Rotor (20) eine weitere Gasleitung (41) in die das Filter (32) mit dem Wärmespeicher (43) verbindende Leitung (47) führt, sowie mit einem Stellventil (36), **dadurch gekennzeichnet, daß** das Stellventil (36) in eine vom Gebläse (30) zur Kühlzone (28) führende Kühlgaszuleitung (33) geschaltet ist und die weitere Gasleitung (41) eine von der Kühlzone (28) ausgehende Kühlgasableitung ist.

7. Vorrichtung nach Anspruch 6, **dadurch gekennzeichnet, daß** der Wärmespeicher in das Gebläse (30) integriert ist.

8. Vorrichtung nach Anspruch 6 oder 7, **dadurch gekennzeichnet, daß** das auf der Abstromseite des Wärmespeichers (34) in der Gasleitung (31) ein Temperaturfühler (42) angeordnet ist, der mit einer Steuerung (50) für das Stellventil (36) verbunden ist.

9. Vorrichtung nach einem der Ansprüche 6 bis 8, **dadurch gekennzeichnet, daß** die Regenerationszone (27) wesentlich größer ist als die Kühlzone (28), zweckmäßig doppelt so groß.

## Claims

1. Method for treating an adsorbent containing a means particularly humidity, wherein the adsorbent is freed from the means by hot regeneration gas and is cooled subsequently, and wherein the heat produced during cooling is transferred to a heat accumulator for heating the regeneration gas, **characterized in that** the adsorbent is fed successively through an adsorption zone (26) wherein the adsorbent receives the means, a regeneration zone (27) wherein the regeneration gas is fed through the adsorbent, and a cooling zone (28) wherein the heat is drawn from the adsorbent and is transferred to the heat accumulator (34).

2. Method according to claim 1, **characterized in that** a fan (30) is utilized as the heat accumulator.

3. Method according to claim 1 or 2, **characterized in that** the adsorbent is fed continuously through the adsorption zone, the regeneration zone and the cooling zone.

4. Method according to anyone of the preceeding claims, **characterized that** a cooling gas is fed in circulation through the cooling zone (28), the heat accumulator (43) and a fan (30), wherein it is switched from cooling to regeneration if the cooling gas leaves the heat accumulator (34) with a temperature which is above a predetermined value.

5. Method according to anyone of the preceeding claims **characterized in that** the period of time of the regeneration is selected greater than that one of the cooling usefully the double thereof.

6. Apparatus for treating an adsorbent containing a means especially humidity, the apparatus having a rotor (20) comprising an adsorption zone (26), a regeneration zone (27) and a cooling zone (28) the adsorbent being contained within the rotor, the apparatus further having a filter (32), a heat accumulator (34), a fan (30) and a heating means (40) which are coupled in series by a gas conduit (47, 31, 39), wherein a regeneration gas feeding conduit (40) extends from the heating means (40) to the regeneration zone (27) and wherein a further gas conduit (41) extends from the rotor (20) to a conduit (47) connecting the filter (32) to the heat accumulator (43), the appartus further having a control valve (36) **characterized that** the control valve (36) is coupled within a cooling gas feeding conduit (33) extending from the fan (30) to the cooling zone (28), and that the further gas conduit (41) is a cooling gas drain conduit extending from the cooling zone (28).

7. Apparatus according to claim 6, **characterized in that** the heat accumulator is integrated into the fan (30).

8. Apparatus according to claim 6 or 7, **characterized in that** a temperature sensor (42) is arranged in the gas conduit (31) downstream to the heat accumulator (34), the temperature sensor being connected to a control (50) for the control valve (36).

9. Apparatus according to anyone of claims 6 through 8 **characterized in that** the regeneration zone (27) is substantially greater than the cooling zone (28), usefully the double of same.

## Revendications

1. Procédé pour traiter un adsorbant contenant d'un moyen en particulier d'humidité, par lequel l'adsorbant est libéré de moyen par un gaz de régénération chauffé et ensuite est rafrâichit, la chaleur produite pendant la réfrigération est transférée à un accumulateur thermique (34) pour chauffer le gaz de régénération, **caractérisé en ce que** l'adsorbant est dirigé successivement à travers une zone d'adsorption (26) dans laquelle l'adsorbant recevoit le moyen, une zone de régénération (27) dans laquelle le gaz de régénération est dirigé à travers l'adsorbant, et une zone de réfrigération (28) dans laquelle la chaleur est extraite d'adsorbant et est menée à l'accumulateur thermique (34).

2. Procédé selon revendication 1 **caractérisé en ce qu'**un ventilateur (30) est utilisé comme accumulateur thermique

3. Procédé selon revendication 1 ou 2 **caracterisé en ce que** l'adsorbant est dirigé continuellement à travers la zone d'adsorption , la zone de régénération et la zone de réfrigération.

4. Procédé selon l'une des revendications précédentes **caractérisé en ce qu'**un gaz froid est dirigé en circulation à travers la zone de réfrigération (28), l'accumulateur thermique (34) et le ventilateur (30), la réfrigération étant renversée à régénération quand le gaz froid échappe de l'accumulateur thermique (34) avec une température d'une valeur fixée par avance.

5. Procédé selon l'une des revendications précédentes caractrérisé en ce que le laps de temps de régénération est selecté plus grand que celui de réfrigération, convenablement le double de celui.

6. Dispositif pour traiter un adsorbant contenant d'un moyen en particulier d'humidité, avec un apparail rotatif (20) contenant une zone d'adsorption (26), une zone de régénération (27) et une zone de réfrigération (28), et contenant l'adsorbant, avec un filtre (32), un accumulateur thermique (34), un ventilateur (30) et un apparail de chauffage (40), qui sont reliés en série par un conduit de gaz (47, 31, 39), un conduit d'alimentation de gaz (40) menant d'apparail de chauffage (40) à la zone de régénération (27) et un autre conduit de gaz (41) menant de l'apparail rotatif (20) à un conduit (47) qui relie le filtre (32) à l'accumulateur thermique (43), et avec une servo-soupape (36), **caractérisé en ce que** la servo-soupape (36) est insérée dans un conduit d'alimentation de gaz froid (33) mené du ventilateur (30) à la zone de réfrigération (28) et que l'autre conduit de gaz (41) est un conduit de dérivation du gaz froid venu de la zone de réfrigération.

7. Dispositif selon revendication 6 caractrérisé en ce que l'accumulateur thermique est intégré au ventilateur (30).

8. Dispositif selon revendication 6 ou 7 **caractérisé en ce qu'**une sonde de température est arrangée dans le conduit de gaz (31) en bas de l'accumulateur thermique (34), la sonde étant reliée à un réglage (50) pour la servo-soupape (36).

9. Dispositif selon l'une des revendications 6 à 8 **caractérisé en ce que** la zone de régénération (27) est bien plus grande que la zone de réfrigération (28), de préférence le double.
